(19) Europäisches Patentamt
European Patent Office
Office européen des brevets

(11) **EP 4 707 749 A1**

(12) **EUROPEAN PATENT APPLICATION**

(43) Date of publication:
**11.03.2026 Bulletin 2026/11**

(21) Application number: **24198683.5**

(22) Date of filing: **05.09.2024**

(51) International Patent Classification (IPC):
**G01D 5/353** $^{(2006.01)}$

(52) Cooperative Patent Classification (CPC):
**G01D 5/35364; G01L 1/241**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **EOSS SA**
**1110 Morges (CH)**

(72) Inventor: **LE FLOCH, Sébastien**
**2613 VILLERET (CH)**

(74) Representative: **IPAZ**
**Bâtiment Platon**
**Parc Les Algorithmes**
**91190 Saint-Aubin (FR)**

(54) **METHOD AND DEVICE FOR MONITORING AN OPTICAL FIBER**

(57) The invention concerns a method (2) for monitoring an optical fiber, comprising a step of scanning the optical fiber comprising at least one iteration (17) of coupling a Brillouin signal (resulting from the interaction between the pump signal and the optical fiber) comprising an anti-Stokes component and a Stokes component centered respectively on frequency $v_{B2}$ or $v_{B1}$, and two probes signals centered respectively on frequency $v_{OL1}$ $v_{OL2}$, on an optical detector. The output detection signal is then processed in order to modify (20) the first probe temporal function and/or the second probe temporal function for a further scanning.

The invention also relates to a device for monitoring an optical fiber.

[Fig. 7]

EP 4 707 749 A1

## Description

### Technical field

The present invention relates to a method for monitoring an optical fiber.

The invention also relates to a device for monitoring an optical fiber.

### State of the Art

Actual BOTDR devices for monitoring an optical fiber typically use the classical technique of frequency sweeping for the determination of the Brillouin frequency shift (BFS) (typically 400MHz by steps of 2MHz). This leads to a measurement time, for a sensing distance of 50km with a spatial resolution of 5m, of about 10min, depending on the required Brillouin frequency measurement accuracy.

The goal of the invention is to present a method and device for monitoring an optical fiber:

- with a reduced measurement time, and/or
- with increased sensing range, and/or
- with a less limited scanning zone in frequency for strain and/or temperature measurements.

### Summary of the Invention

An aspect of the invention concerns a method for monitoring an optical fiber, comprising several successive implementations of the following steps:

- A step of scanning the optical fiber comprising at least one iteration of the following steps:

  ◦ generating and injecting an optical pump signal in the optical fiber, the pump signal being centered on a pump frequency $\nu_L$,
  ◦ Collecting, from the optical fiber, a Brillouin signal resulting from the interaction between the pump signal and the optical fiber, the Brillouin signal comprising an anti-Stokes component centered on an anti-Stokes frequency $\nu_{B_2}$ and a Stokes component centered on a Stokes frequency $\nu_{B_1}$, the anti-Stokes frequency $\nu_{B_2}$ and the Stokes frequency $\nu_{B_1}$ depending on time,
  ◦ Generating a first optical probe signal and a second optical probe signal, the first probe signal being centered on a first probe frequency $\nu_{OL_1}$, the second probe signal being centered on a second probe frequency $\nu_{OL_2}$, wherein at each given time the first probe frequency $\nu_{OL_1}$, is different from the second probe frequency $\nu_{OL_2}$, wherein at each given time each probe frequency $\nu_{OL_1}$, $\nu_{OL_2}$ is different from the pump frequency $\nu_L$, the first probe frequency $\nu_{OL_1}$

depending on time according to a first probe temporal function, the second probe frequency $\nu_{OL_2}$ depending on time according to a second probe temporal function,
  ◦ Coupling the two probe signals and the Brillouin signal on an optical detector,
  ◦ a detection, by the detector, of an output detection signal resulting from the coupling step and depending on time,

- a processing step comprising, based on the output detection signal(s) of the previous scanning:

  ◦ determining the anti-Stokes frequency $\nu_{B_2}$ and/or the Stokes frequency $\nu_{B_1}$, and/or a Brillouin frequency shift and/or a temperature and/or a strain in the optical fiber
  ◦ modifying the first probe temporal function and/or the second probe temporal function for a further scanning.

During the scanning, the first probe frequency $\nu_{OL_1}$, and the second probe frequency $\nu_{OL_2}$ can follow the temporal variations of respectively the Stokes frequency $\nu_{B_1}$ and the anti-Stokes frequency $\nu_{B_2}$.

During the scanning, the first probe frequency $\nu_{OL_1}$ and the second probe frequency $\nu_{OL_2}$ can be symmetrical or substantially symmetrical with respect to the pump frequency $\nu_L$ and are both distant from pump frequency $\nu_L$ by a frequency equal or substantially equal to a frequency $f_{RF}$.

$|\nu_{OL_2} - \nu_{B_2}|$ and/or $|\nu_{B_1} - \nu_{OL_1}|$ (or even $\nu_{B_1} - \nu_{OL_1}$ and/or $\nu_{OL_2} - \nu_{B_2}$) can be constant or substantially constant during the scanning and the further scanning(s).

The first probe temporal function and/or the second probe temporal function can be modified in order to maintain constant or substantially constant $|\nu_{OL_2} - \nu_{B_2}|$ and/or $|\nu_{B_1} - \nu_{OL_1}|$ (or even $\nu_{B_1} - \nu_{OL_1}$ and/or $\nu_{OL_2} - \nu_{B_2}$).

The processing step can use, on the output detection signal(s), multi-heterodyne detection at least at frequencies $f_0$, $f_0 - \delta f$, and $f_0 + \delta f$, or Short-Time Fourier Transform (STFT) at least at frequencies $f_0$, $f_0 - \delta f$, and $f_0 + \delta f$; the first probe temporal function and/or the second probe temporal function can be modified in order to minimize, for each given time, the difference between $f_0$ and $\nu_B$, $\nu_B$ being equal or substantially equal to $|\nu_{OL_2} - \nu_{B_2}|$ and/or $|\nu_{B_1} - \nu_{OL_1}|$.

The output detection signal can be a Lorentzian function centered or substantially centered on $\nu_B$ and/or $f_0$.

The detector can have a bandwidth of at least 1 time $|\nu_{OL_2} - \nu_{B_2}|$ and/or $|\nu_{B_1} - \nu_{OL_1}|$, or at least 2 times $|\nu_{OL_2} - \nu_{B_2}|$ and/or $|\nu_{B_1} - \nu_{OL_1}|$.

The detector can have a bandwidth of less than 10 times $|\nu_{OL_2} - \nu_{B_2}|$ and/or $|\nu_{B_1} - \nu_{OL_1}|$, or less than 5 times $|\nu_{OL_2} - \nu_{B_2}|$ and/or $|\nu_{B_1} - \nu_{OL_1}|$.

The detection and/or the processing step can comprise a frequency low-pass filtering of the output detection signal with a bandwidth less than 10 times $|v_{OL_2} - v_{B_2}|$ and/or $|v_{B_1} - v_{OL_1}|$, or less than 5 times $|v_{OL_2} - v_{B_2}|$ and/or $|v_{B_1} - v_{OL_1}|$. Each scanning can comprise at least 100, or at least 1000, iterations.

An other aspect of the invention concerns a monitoring device, comprising:

- A scanning system comprising:

  ○ A connector arranged for connecting an optical fiber,
  ○ a pump generator arranged for generating an optical pump signal and injecting the pump signal through the connector in the optical fiber, the pump signal being centered on a pump frequency $v_L$,
  ○ a collector arranged for collecting, from the connector, a Brillouin signal resulting from the interaction between the pump signal and the optical fiber, the Brillouin signal comprising an anti-Stokes component centered on an anti-Stokes frequency $v_{B_2}$ and a Stokes component centered on a Stokes frequency $v_{B_1}$, the anti-Stokes frequency $v_{B_2}$ and the Stokes frequency $v_{B_1}$ depending on time,
  ○ a probe generator arranged for generating a first optical probe signal and a second optical probe signal, the first probe signal being centered on a first probe frequency $v_{OL_1}$, the second probe signal being centered on a second probe frequency $v_{OL_2}$, wherein at each given time the first probe frequency $v_{OL_1}$ is different from the second probe frequency $v_{OL_2}$, wherein at each given time each probe frequency $v_{OL_2}$, $v_{OL_2}$ is different from the pump frequency $v_L$, the first probe frequency $v_{OL_1}$ depending on time according to a first probe temporal function, the second probe frequency $v_{OL_2}$ depending on time according to a second probe temporal function
  ○ an optical detector,
  ○ a coupler, arranged for coupling the two probe signals and the Brillouin signal on the optical detector, the detector being arranged for detecting, an output detection signal depending on time and resulting from the coupling of the two probe signals and the Brillouin signal(s) on the optical detector,

  the scanning system being arranged for obtaining at least one output detection signal(s) per scanning by the scanning system,
- a processor arranged and/or programmed for, based on at least one output detection signal(s) of the scanning system:

  ○ determining the anti-Stokes frequency $v_{B_2}$ and/or the Stokes frequency $v_{B_1}$, and/or a Brillouin frequency shift and/or a temperature and/or a strain in the optical fiber
  ○ modifying the first probe temporal function and/or the second probe temporal function for a further scanning of the optical fiber by the scanning system.

The processor can be arranged and/or programmed so that, during the scanning, the first probe frequency $v_{OL_1}$, and the second probe frequency $v_{OL_2}$ follow the temporal variations of respectively the Stokes frequency $v_{B_1}$ and the anti-Stokes frequency $v_{B_2}$.

The processor can be arranged and/or programmed so that, during the scanning, the first probe frequency $v_{OL_1}$, and the second probe frequency $v_{OL_2}$ are symmetrical or substantially symmetrical with respect to the pump frequency $v_L$ and are both distant from pump frequency $v_L$ by a frequency equal or substantially equal to a frequency $f_{RF}$.

The processor can be arranged and/or programmed so that $|v_{OL_2} - v_{B_2}|$ and/ or $|v_{B_1} - v_{OL_1}|$, (or even $v_{B_1} - v_{OL_1}$ and/or $v_{OL_2} - v_{B_2}$) is constant or substantially constant during the scanning and the further scanning(s).

The processor can be arranged and/or programmed so that the first probe temporal function and/or the second probe temporal function is modified in order to maintain constant or substantially constant $|v_{OL_2} - v_{B_2}|$ and/or $|v_{B_1} - v_{OL_1}|$ (or even $v_{B_1} - v_{OL_1}$ and/or $v_{OL_2} - v_{B_2}$).

The processor can be arranged and/or programmed to use, on the output detection signal(s), multi-heterodyne detection at least at frequencies $f_0$, $f_0 - \delta f$, and $f_0 + \delta f$, or Short-Time Fourier Transform (STFT) at least at frequencies $f_0$, $f_0 - \delta f$, and $f_0 + \delta f$ for determining the anti-Stokes frequency $v_{B_2}$ and/or the Stokes frequency $v_{B_1}$, and/or a Brillouin frequency shift and/or a temperature and/or a strain in the optical fiber and/or for modifying the first probe temporal function and/or the second probe temporal function for a further scanning of the optical fiber by the scanning system, and the processor can be arranged and/or programmed to modify the first probe temporal function and/or the second probe temporal function in order to minimize, for each given time, the difference between $f_0$ and $v_B$, $v_B$ being equal or substantially equal to $|v_{OL_2} - v_{B_2}|$ and/or $|v_{B_1} - v_{OL_1}|$.

The optical detector can be arranged so that the output detection signal is a Lorentzian function centered or substantially centered on $v_B$ and/or $f_0$.

The detector can have a bandwidth of at least 1 time $|v_{OL_2} - v_{B_2}|$ and/or $|v_{B_1} - v_{OL_1}|$, or at least 2 times $|v_{OL_2} - v_{B_2}|$ and/or $|v_{B_1} - v_{OL_1}|$.

The detector can have a bandwidth of less than 10 times $|v_{OL_2} - v_{B_2}|$ and/or $|v_{B_1} - v_{OL_1}|$, or less than 5 times $|v_{OL_2} - v_{B_2}|$ and/or $|v_{B_1} - v_{OL_1}|$.

The processor can be arranged and/or programmed to implement a frequency low-pass filtering of the output detection signal with a bandwidth less than 10 times $|v_{OL_2} - v_{B_2}|$ and/or $|v_{B_1} - v_{OL_1}|$, or less than 5 times $|v_{OL_2} - v_{B_2}|$ and/or $|v_{B_1} - v_{OL_1}|$.

The scanning system can be arranged for obtaining at least 100, or at least 1000, output detection signal(s) per scanning by the scanning system.

**Detailed description of the figures and of realization modes of the invention**

Other advantages and characteristics of the invention will appear upon examination of the detailed description of embodiments which are in no way limitative, and of the appended drawings in which:

- Figure 1 illustrates a first embodiment of a device 1 according to the invention, which is a best realization mode,
- Figure 2 illustrates the signal 122 at the output of detector 10 of device 1 and only as a function of frequency,
- Figure 3 illustrates the positions of different signals 8, 81, 82, 91, 92, 121, 122 in device 1,
- Figure 4 illustrates the signal 121 at the input of detector 10 of device 1 and only as a function of frequency,
- Figure 5 illustrates the signal 122 at the output of detector 10 of device 1 and only as a function of frequency,
- Figure 6 illustrates

  - on its left part A): the first probe frequency $v_{OL_1}$ (which is a part of the input signal 121 reaching detector 10 of device 1) and the Brillouin Stokes frequency $v_{B_1}$, as a function of time and frequency,
  - on its right part B): the signal 122 at the output of detector 10 of device 1 and as a function of time and frequency,

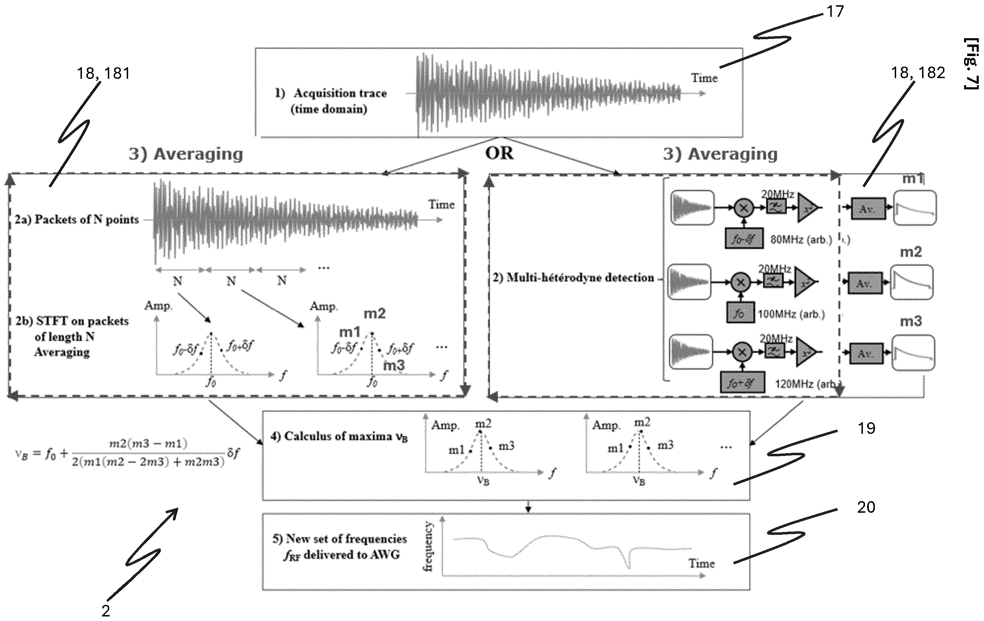

- Figures 7 illustrates some steps of a first embodiment of a method 2 according to the invention, which is a best realization mode, and implemented by device 1,

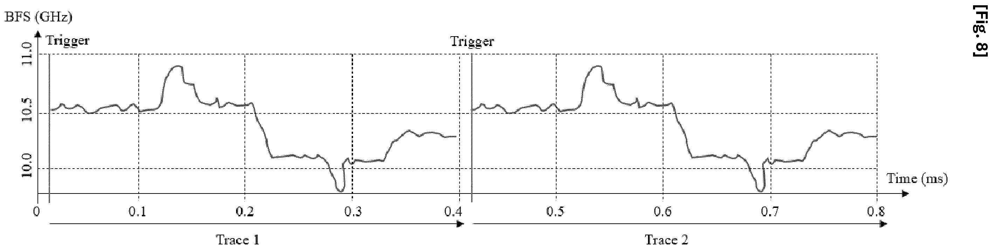

- Figure 8 illustrates an example trace of Brillouin frequency shift (BFS) measured as a function of time by device 1 and method 2,

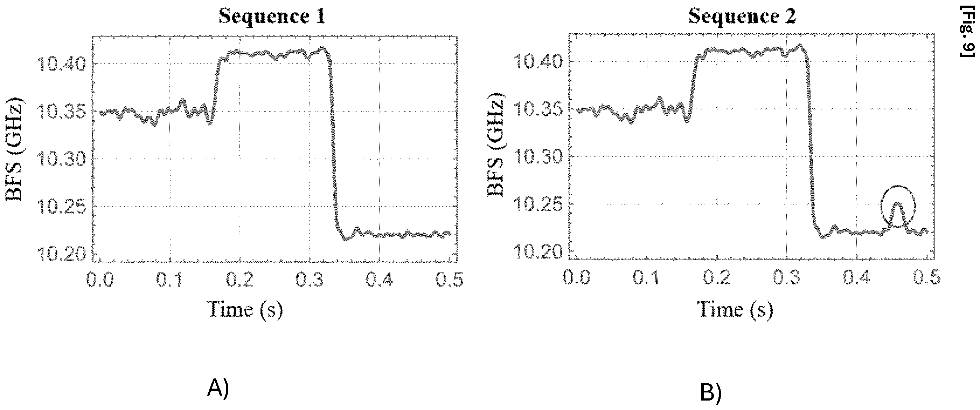

- Figure 9 illustrates:

  - on its left part A): an example trace of Brillouin frequency shift (BFS) measured as a function of time by device 1 and method 2 after one sequence,
  - on its right part B): an example trace of Brillouin frequency shift (BFS) measured as a function of time by device 1 and method 2 after another sequence, subsequent to that illustrated in part A) of figure 9, and

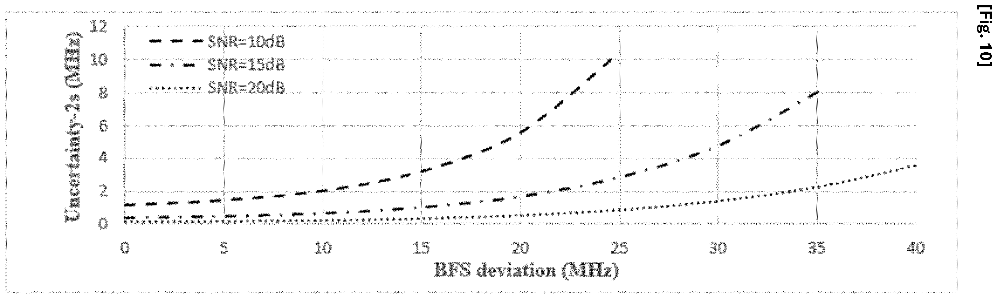

- Figure 10 illustrates a simulation of the measurement uncertainty (2s) on the BFS of a Lorentzian spectrum versus the BFS deviation between 2 consecutive sequences and for different signal-to-noise ratios SNR in device 1 or method 2.

These embodiments being in no way limitative, we can consider variants of the invention including only a selection of characteristics subsequently described or illustrated, isolated from other described or illustrated characteristics (even if this selection is taken from a sentence containing these other characteristics), if this selection of characteristics is sufficient to give a technical advantage or to distinguish the invention over the state of the art. This selection includes at least one characteristic, preferably a functional characteristic without structural details, or with only a part of the structural details if that part is sufficient to give a technical advantage or to distinguish the invention over the state of the art.

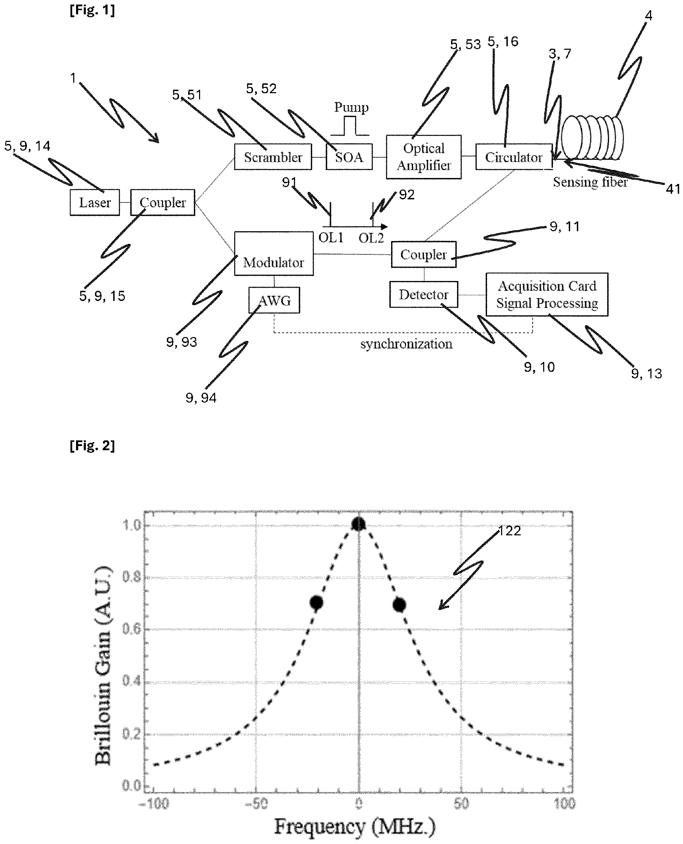

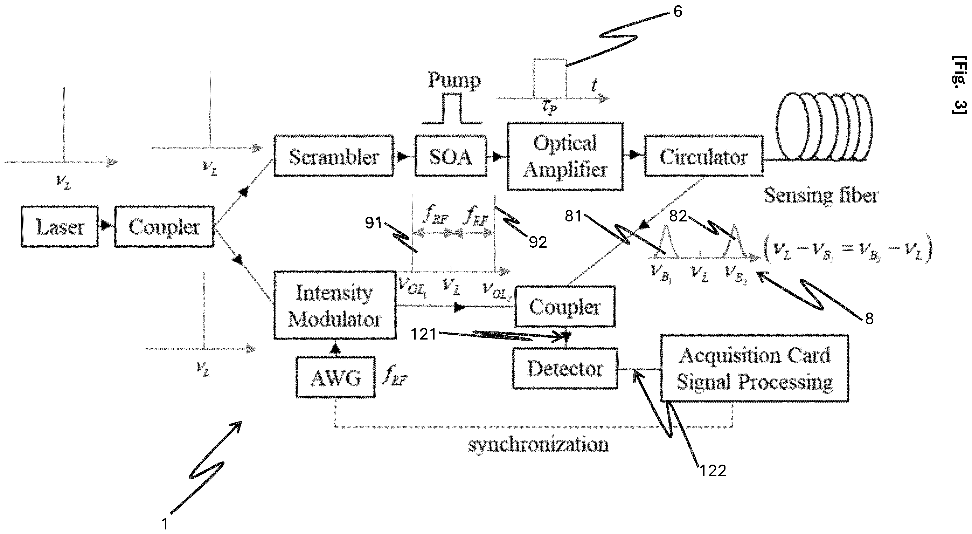

We are now going to describe, in reference to figures 1 to 10, a first embodiment of a device 1 according to the invention implementing a first embodiment of a method 2 according to the invention.

Device 1 or method 2 is respectively a Brillouin Optical Time Domain Reflectometer (BOTDR) device 1 or method 2.

Device 1 or method 2 is respectively a device and method for monitoring a fiber 4, more precisely for measuring a Brillouin frequency shift and/or a temperature and/or a strain in the optical fiber 4.

Device 1 or method 2 is dedicated to a BOTDR device 1 or method 2 with two probes 91, 92 and one pump 6.

The device 1 or method 2 solves the problematic of the frequency sweeping, thus saving a considerable amount of time. For example, for a sensing distance of 50km with a spatial resolution of 5m, device 1 or method 2 is able to reach a measurement time of about 10s with approximately the same accuracy on the Brillouin frequency shift (BFS) than prior art in about 10 min. Moreover, unlike a conventional BOTDR, the scanning zone in frequency is not limited, so that the full elastic zone (typ. ±500MHz) of the sensing fibers is completely resolved.

The monitoring device 1, comprises :

- A scanning system comprising:

  ○ A connector 3 arranged for connecting an optical fiber 4 (fiber 4 is not part of device 1, but is a tested or monitored fiber 4 and can be changed); connector 3 is for example a classical optical fiber connector such like an optical circulator,
  ○ a pump generator 5 arranged for generating a pulsed optical pump signal 6 (for example a constant amplitude square pulse) and for injecting the pump signal 6 through the connector 3 in the optical fiber 4, the pump signal 6 being centered on a pump frequency $v_L$ which is constant over time and is for example equal to a value in the interval from $1.8 \times 10^{14}$ Hz (1650 nm) to $2.3 \times 10^{14}$ Hz (1300 nm), for example around $1.9 \times 10^{14}$ Hz (1550 nm).

◦ a collector 7 arranged for collecting, from the connector 3 and from fiber 4, a Brillouin signal 8 resulting from the interaction between the pump signal 6 and the optical fiber 4, the Brillouin signal 8 comprising an anti-Stokes component 82 centered on an anti-Stokes frequency $v_{B_2}$ and a Stokes component 81 centered on a Stokes frequency $v_{B_1}$, the anti-Stokes frequency $v_{B_2}$ and the Stokes frequency $v_{B_1}$ depending on time as the temperature or strain of fiber 4 may vary in time and space; each one of $v_{B_1}$ and $v_{B_2}$ is variable over time and variable according to the longitudinal position along the fiber 4; thus the Brillouin frequency shift (noted BFS or $v_B$), defined as equal to $BFS = v_L - v_{B_1} = v_{B_2} - v_L$ , is variable according to the longitudinal position along the fiber 4 and variable over time and is for example equal to a value in the interval from 5 to 15 GHz, preferably between 9 and 12 GHz, preferably between 10 and 11 GHz, for example around 10.5 GHz.

◦ a probe generator 9 arranged for generating a first optical probe signal 91 and a second optical probe signal 92, the first probe signal 91 being centered on a first probe frequency $v_{OL_1}$, the second probe signal 92 being centered on a second probe frequency $v_{OL_2}$, wherein at each given time the first probe frequency $v_{OL_1}$ is different from the second probe frequency $v_{OL_2}$, wherein at each given time each probe frequency $v_{OL_1}$, $v_{OL_2}$ is different from the pump frequency $v_L$, the first probe frequency $v_{OL_1}$ depending on time according to a first probe temporal function, the second probe frequency $v_{OL_2}$ depending on time according to a second probe temporal function;

◦ an optical detector 10, for example a photodetector, for example a TIA950 (TeraHertz Technology), or a balanced photodetector, for example a PDB835C (Thorlabs),

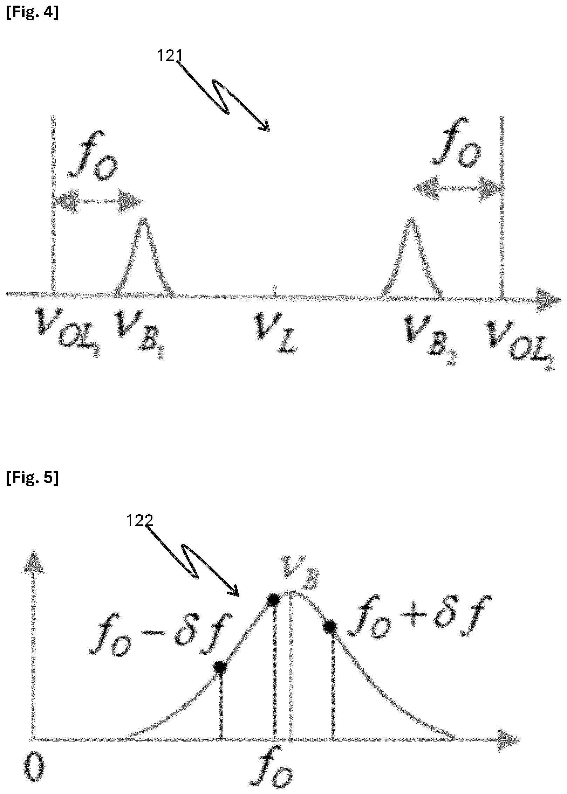

◦ a coupler 11, arranged for coupling the two probe signals 91, 92 and the Brillouin signal 8 on the optical detector 10, the detector 10 being arranged for generating and/or detecting an output detection signal 122 (illustrated in figure 5) depending on time and resulting from its input detection signal 121 (this input signal, illustrated in figure 4, being the coupling of the two probe signals 91, 92 and the Brillouin signal 8 on the optical detector 10); the coupler 11 is typically an optical coupler (2x1 or 2x2),

the scanning system being arranged for obtaining at least one output detection signal(s) 122 per scanning by the scanning system,

- a processor 13 arranged and/or programmed for, based on at least one output detection signal(s) 122 of the scanning system:

  ◦ determining the anti-Stokes frequency $v_{B_2}$ and/or the Stokes frequency $v_{B_1}$, and/or a Brillouin frequency shift and/or a temperature and/or a strain in the optical fiber 4,
  ◦ modifying the first probe temporal function and/or the second probe temporal function for at least one further or next scanning of the optical fiber 4 by the scanning system.

Processor 13 typically comprise at least one computer, one central processing or computing unit, one analogue electronic circuit (e.g. dedicated analogue electronic circuit), one digital electronic circuit (e.g. dedicated digital electronic circuit) and/or one microprocessor (e.g. dedicated microprocessor) and/or software means.

The pump generator 5 typically comprises:

- an optical source 14, such like a laser 14, for example a laser having a 1550 nm wavelength and a narrow linewidth (typically less than 5 MHz),
- a coupler 15, such like an optical coupler,
- a scrambler 51, such like a polarization scrambler (passive or active),
- at least one component for generating a pulse from continuous beam or signal of source 14, for example:

  ◦ a semiconductor optical amplifier (SOA) 52,

- at least one amplification stage, such like an optical amplifier 53, such like an Erbium Doped Fiber Amplifier (EDFA) ,
- a circulator 16, such like an optical circulator.

The probe generator 9 typically comprises:

- the optical source 14,
- the coupler 15
- a modulator 93 arranged to suppress the carrier wave (coming from source 14 and coupler 15) and to generate two sidebands 91, 92 (see figure 1) , modulator 93 being for example an intensity modulator or Mach Zehnder electro optic modulator,
- the coupler 11
- the detector 10
- the processor 13
- an arbitrary waveform generator (AWG) 94, arranged to generate frequencies, for example, in the range 5-15 GHz and with "instantaneous" frequency change (less than 10 ns)

The optical source 14 generates an initial continuous signal or beam centered on the pump frequency $v_L$ , which is separated in two parts by coupler 15:

- a first part of this initial signal:

    ○ is sent from coupler 15 to scrambler 51, and has its modal distribution modified by the scrambler 51 in order to be optimized for the fiber 4, then
    ○ is pulsed by the SOA 52, then
    ○ is amplified by the at least amplifier, for example by the optical amplifier 53, in order to generate the final form of the optical pump signal 6, then
    ○ pass through the circulator 16 before being injected, through the connector 3, into one end 41 of the fiber 4 (the optical end of the circulator 16 connected to end 41 of fiber 4 is thus the connector 3); the interaction between the optical pump signal 6 and fiber 4 generates the Brillouin signal 8 which its collected from end 41 by circulator 16 (the optical end of the circulator 16 connected to end 41 of fiber 4 is thus the collector 7) and then sent to coupler 11;

- a second part of this initial signal is sent from coupler 15 to modulator 93, and is transformed by modulator 93 into the first optical probe signal 91 and the second optical probe signal 92, then the coupler 11 send the first optical probe signal 91 and the second optical probe signal 92 from modulator 93 to coupler 11,
- then the first optical probe signal 91 and/or the second optical probe signal 92 and the Brillouin signal(s) 8 are coupled into coupler 11 (the first optical probe signal 91 and the second optical probe signal 92 are coming from modulator 93; the Brillouin signal 8 is coming from circulator 16) ,
- then coupler 11 send to the detector 10 the input signal 121 (which is the coupled first optical probe signal 91 and second optical probe signal 92 and Brillouin signal 8), thus generating the output detection signal 122 generated by detector 10 from the input signal 121,
- then processor 13, based on one or several previously detected output detection signal(s) 122 as a function of time, determines modified first probe temporal function and/or second probe temporal function for at least one further or next scanning and send corresponding data to AWG 94
- then AWG 94 transmits a new set of frequencies $f_{RF}$ to the intensity modulator 93 in order to generate a first probe temporal function and/or second probe temporal function for the at least one further or next scanning.

The first optical probe signal 91 and second optical probe signal 92 are also called the "optical local oscillators" or LO.

Thus method 2 for monitoring the optical fiber 4 comprises several successive implementation of the following steps :

- A step of scanning the optical fiber 4 comprising at least one iteration 17 of the following steps:

    ○ generating (by references 14, 15, 51, 52, 53) and injecting (by references 16, 3) the optical pump signal 6 in the optical fiber 4, the pump signal 6 being centered on the pump frequency $v_L$,
    ○ Collecting (by references 16, 3, 7), from the optical fiber 4, the Brillouin signal 8 resulting from the interaction between the pump signal 6 and the optical fiber 4, the Brillouin signal 8 comprising the anti-Stokes component 82 centered on the anti-Stokes frequency $v_{B_2}$ and the Stokes component 81 centered on the Stokes frequency $v_{B_1}$, the anti-Stokes frequency $v_{B_2}$ and the Stokes frequency $v_{B_1}$ depending on time,
    ○ Generating (by references 14, 15, 93) the first optical probe signal 91 and the second optical probe signal 92, the first probe signal 91 being centered on the first probe frequency $v_{OL_1}$, the second probe signal 92 being centered on the second probe frequency $v_{OL_2}$, wherein at each given time the first probe frequency $v_{OL_1}$ is different from the second probe frequency $v_{OL_2}$, wherein at each given time each probe frequency $v_{OL_1}$, $v_{OL_2}$ is different from the pump frequency $v_L$, the first probe frequency $v_{OL_1}$ depending on time according to the first probe temporal function, the second probe frequency $v_{OL_2}$ depending on time according to the second probe temporal function; each one of $v_{OL_1}$ and $v_{OL_2}$ is variable over time according to its function (respectively the first probe temporal function and the second probe temporal function) and is for example varied each 20 ns within a maximum variation of 1 GHz, but the first probe temporal function and the second probe temporal function do not change and is the same for all the iterations inside a given scanning step; the first probe temporal function and the second probe temporal function may change for a further or next scanning step,
    ○ Coupling (in this case, simply adding), by reference 11, the two probe signals 91, 92 and the Brillouin signal 8 on the optical detector 10,
    ○ a detection, by the detector 10, of the output detection signal 122 resulting from the coupling step and depending on time,

- a processing step, in particular by processor 13, this processing step comprising, based on the output detection signal(s) 122 of the previous scanning (for example based on several output detection signals 122 that are averaged during an average step 18 that can have different variants 181, 182):

○ determining 19 (by reference 13) the anti-Stokes frequency $\nu_{B_2}$ and/or the Stokes frequency $\nu_{B_1}$, and/or a Brillouin frequency shift and/or a temperature and/or a strain in the optical fiber (temperature or strain being directly calculable from an algorithm or an equation integrating the anti-Stokes frequency $\nu_{B_2}$ and/or the Stokes frequency $\nu_{B_1}$, and/or a Brillouin frequency shift according to well-known prior art BOTDR methods)

○ determining 20 ((by reference 13) and modifying (by references 13, 94, 93) the first probe temporal function and/or the second probe temporal function for at least one further or next scanning.

During the scanning step (and its at least one iteration 17), the first probe frequency $\nu_{OL_1}$ and the second probe frequency $\nu_{OL_2}$ follow or substantially follow the temporal variations of respectively the Stokes frequency $\nu_{B_1}$ and the anti-Stokes frequency $\nu_{B_2}$, the processor 13 being arranged and/or programmed for it.

Each scanning comprises at least 100, or at least 1000, iterations, the processor 13 being arranged and/or programmed for it.

During the scanning step (and its at least one iteration 17), the first probe frequency $\nu_{OL_1}$ and the second probe frequency $\nu_{OL_2}$ are symmetrical or substantially symmetrical with respect to the pump frequency $\nu_L$ and are both distant from pump frequency $\nu_L$ by a frequency equal or substantially equal to a frequency $f_{RF}$, the processor 13 being arranged and/or programmed for it.

Each one of $|\nu_{OL_2} - \nu_{B_2}|$ and/or $|\nu_{B_1} - \nu_{OL_1}|$ (and even of $\nu_{B_1} - \nu_{OL_1}$ and $\nu_{OL_2} - \nu_{B_2}$) is constant or substantially ($\pm 1\%$) constant during the scanning and the further scanning(s), the processor 13 being arranged and/or programmed for it.

$f_0$ is constant over time and is for example equal to a value in the interval from 10 MHz to 1000 MHz, for example equal to 100 MHz,

In this specification, we also call $f_{RF}$ :

$$f_{RF} = f_0 + \nu_L - \nu_{B_1} = f_0 + \nu_{B_2} - \nu_L$$

$$f_{RF} = \nu_L - \nu_{OL_1} = \nu_{OL_2} - \nu_L$$

$f_{RF}$ and $\nu_L$-$\nu_{B1}$=$\nu_{B2}$-$\nu_L$ are for example between 9GHz and 12GHz.

The output detection signal 122 is a Lorentzian function.

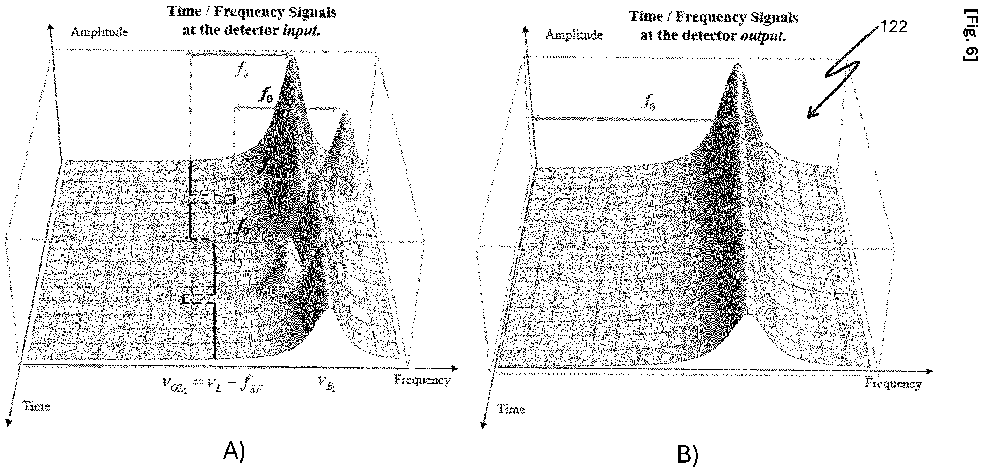

The output detection signal 122 is centered or substantially centered on $\nu_{B\square}$ and/or $f_0$ (as illustrated in figure 5 and 6B), the detector 10 being arranged and/or programmed for it.

The bandwidth of the detector 10 sees only low frequency components.

The detector 10 has a bandwidth (starting from the zero frequency) for example superior to 50 MHz and/or inferior to 1000 MHz, for example equal or substantially equal to 200 MHz.

The detector has a bandwidth of at least 1 time $|\nu_{OL_2} - \nu_{B_2}|$ and/or $|\nu_{B_1} - \nu_{OL_1}|$, or at least 2 times $|\nu_{OL_2} - \nu_{B_2}|$ and/or $|\nu_{B_1} - \nu_{OL_1}|$.

The detector has a bandwidth of less than 10 times $|\nu_{OL_2} - \nu_{B_2}|$ and/or $|\nu_{B_1} - \nu_{OL_1}|$, or less than 5 times $|\nu_{OL_2} - \nu_{B_2}|$ and/or $|\nu_{B_1}, - \nu_{OL_1}|$.

In a variant:

- the detection and/or the processing step comprises a frequency low-pass filtering of the output detection signal with a bandwidth (starting from the zero frequency) for example superior to 50 MHz and/or inferior to 1000 Mhz, for example equal or substantially equal to 200 MHz. and/or

- the detection and/or the processing step comprises a frequency low-pass filtering of the output detection signal with a bandwidth of at least 1 time $|\nu_{OL_2} - \nu_{B_2}|$ and/or $|\nu_{B_1} - \nu_{OL_1}|$, or at least 2 times $|\nu_{OL_2} - \nu_{B_2}|$ and/or $|\nu_{B_1} - \nu_{OL_1}|$, and/or

the detection and/or the processing step comprises a frequency low-pass filtering of the output detection signal with a bandwidth less than 10 times $|\nu_{OL_2} - \nu_{B_2}|$ and/or $|\nu_{B_1} - \nu_{OL_1}|$, or less than 5 times $|\nu_{OL_2} - \nu_{B_2}|$ and/or $|\nu_{B_1} - \nu_{OL_1}|$, the processor 13 being arranged and/or programmed for it. The processing step comprise an average step 18 (as illustrated in figure 7), comprising, on the output detection signal(s) 122 of a given scanning:

- multi-heterodyne detection at, for example, frequencies $f_0$, $f_0 - \delta f$, and $f_0 + \delta f$ (as illustrated by variant 182 of step 18 of figure 7), or

- Short-Time Fourier Transform (STFT) on several frequencies, for example at frequencies $f_0$, $f_0 - \delta f$, and $f_0 + \delta f$ (as illustrated by variant 181 of step 18 of figure 7)

the processor 13 being arranged and/or programmed for it.

$\delta f$ is illustrated in figure 5.

$\delta f$ is constant over time and is for example equal to a value in the interval from 5 to 50 Mz, for example around 20 MHz.

Thus, in averaging step 18, the signal acquired by processor 13 is a temporal trace. In order to retrieve the local spectrum of the Brillouin signal 8, device 1 and/or method 2 uses either a multi-heterodyne detection 182 on several frequencies, for example at frequencies fo-δf, fo and fo+δf, or a Short-Time Fourier Transform (STFT) 181 on 3 or more points in frequency at least at frequencies $f_0$, $f_0 - \delta f$, and $f_0 + \delta f$, the first probe temporal function and/or the second probe temporal function being modified in order to minimize, for each given time, the difference between $f_0$ and $v_B$, $v_B$ being equal or substantially equal to $|v_{OL2} - v_{B2}|$ and/or $|v_{B1} - v_{OL1}|$ (the processor 13 being arranged and/or programmed for it). The spatial resolution is related to the duration $\tau_P$ of pump pulse 6 (e.g. $\tau_P$ =50ns corresponds to 5m). The number of points detected by the detector 10 depends on the sampling rate of the acquisition card (e.g. 1Gs/s) of processor 13. The STFT is realized on packets of points corresponding to the spatial resolution (equivalent pump pulse duration), in the illustrated example N=50 points (50ns×1Gs/s=50).

Once the averaging is done, the new local BFS are calculated by processor 13 and sent to the AWG 94 for the further or next scanning step :

- in step 19, the distributed Brillouin frequencies are calculated : The fit is done by processor 13 with at least 3 measurement points. For example, if the Brillouin gain spectrum is Lorentzian, then the Brillouin frequency is given by a simple relation (for 3 measurement points) :

$$v_B = f_0 + \frac{m2(m3 - m1)}{2(m1(m2 - 2m3) + m2m3)}\delta f$$

including fo, $\delta f$ and the 3 local gain measurements (m1, m2 and m3) at frequencies fo-$\delta f$, fo and fo+$\delta f$ respectively. This is possible because the Lorentzian has 3 characteristics: amplitude, linewidth and maximum. It is also possible to make a fit on a polynomial of degree 2, or any other method,
- in step 20, the new $f_{RF}$ frequencies are launched by processor 13 to the AWG 94 : the first probe temporal function and/or the second probe temporal function is modified, in step 20, by processor 13, in order to maintain constant or substantially constant $|v_{B1} - v_{OL1}|$ and/or $|v_{OL1} - v_{B2}|$,

the processor 13 being arranged and/or programmed for it.

For one measurement of Brillouin frequency shifts, and thus for one scanning step :

- Hundreds or thousands of pump pulses 6 (and thus of iterations 17) are launched, with a repetitive train of distinct frequences $f_{RF}$ corresponding to the ones calculated in the previous processing step. Device 1 and/or method 2 acquires synchronously the traces 122.

- For each trace 122: real-time signal processing (STFT or multi-heterodyne according to step 18) in done in order to calculate for each position in the sensing fiber 4 the amplitudes m1, m2, m3 at frequencies fo, fo-df and fo+df in the case of a 3 frequencies detection.

- After averaging: in the case of a 3 frequencies detection, the averaged values of m1, m2 and m3 are used to calculate (in step 19) accurately the local Brillouin frequency shift.

- Once all Brillouin frequency shifts along the sensing fiber 4 are calculated, a new set of $f_{RF}$ is launched (in step 20) by the AWG 94 and the next scanning step starts.

The AWG 94 delivers the radio-frequency coded sequence to the intensity modulator that generates the optical local oscillators (that means $v_{OL1}$, according to the first probe temporal function and $v_{OL2}$ according to the second probe temporal function) in loop mode, depending on the averaging needed. The acquisition traces 122 are synchronized to the pump pulse 6 by a trigger.

This way $f_0$ is kept as close as possible to $v_B$.

As these amplitudes at frequencies fo-$\delta f$, fo and fo+$\delta f$ are directly calculated by processor 13 (for example in the embedded acquisition card of processor 13, this embedded acquisition card being for example a Field Programmable Gate Arrays (FPGA)) after an averaged sequence 18, the regulation loop follows only one process : the calculated BFS are directly fed to the AWG 94 to immediately start a new scanning step sequence. During time, all the calculated BFS of each averaged scanning step sequence are extracted by processor 13 and to the processor 13 (for example to a computer being part of processor 13) for storage and monitoring.

Figure 9 shows a frequency coded sequence (part A of figure 9) that corresponds to the actual BFS in the sensing fibre 4. After calculation of the new BFS, it is found that the BFS around 0.45ms have changed : the next frequency coded sequence (part B of figure 9) is updated in the AWG in order to follow the new BFS.

A better efficiency of the tracking is achieved if the local BFS change is inferior or equal to $\delta f$ between 2 consecutive scanning steps, even if the technique can still operate above $\delta f$ but with a decreased accuracy on the BFS. For example, if $\delta f$=20MHz, this means that the maximum temperature change between 2 scanning steps should be between ±20°C, or a strain change of ±1m$\varepsilon$, which should cover most of the application cases. In some rare cases, this can be mitigated by adapting the averaging of each scanning step.

Figure 10 represents a simulation of the measurement uncertainty (2 standard deviations) on the BFS of a Lorentzian spectrum versus the BFS deviation between 2 consecutive sequences and for different signal-to-noise ratios SNR ($\delta f$=20MHz and the half-width at half maximum of the Brillouin signal $\delta f_B$=60MHz).

As a conclusion, this new device 1 or method 2 for BOTDR intends to decrease the measurement time of the sensing fibre 4 by adjusting, in real time, the frequency of the optical local oscillators (LO) 91, 92 to the local Brillouin frequency shift. The local BFS is calculated thanks to the simultaneous measurements of at least three heterodyne frequencies in the electrical domain, where the central frequency is centered on the previous measurement of the BFS. The LO frequencies are continuously updated, for example by the embedded arbitrary waveform generator 94 that drives the modulator 93.

The principle is based on the possibility for the embedded AWG 94 to change and update the radio-frequencies on the modulator 93 at very high speed (hundreds of thousands frequencies, for example with one frequency each 3ns in the 9.5GHz-11.5GHz bandwidth): their frequencies are continuously following the local BFS along the sensing fiber 4, so that the interferometric signal between both LO 91, 92 and Brillouin signals 8 is always around its maximum. In the electrical domain, at least 3 frequencies are digitally created (obtained by heterodyning or Short Term Fast Fourier Transform on 3 or more frequencies): the central frequency (fo) is adjusted on the local BFS while the others are shifted by $\pm\delta f$ (typ. -20MHz and +20MHz). The Brillouin signal is recorded at these 3 frequencies (fo-$\delta f$, fo and fo+$\delta f$) and the local BFS is accurately determined by a simple calculation on the 3 (or more) measurement points. Then the frequencies on the AWG 94 are updated and the next distributed measurement (scanning step) begins etc...

As the instantaneous frequencies of the LO 91, 92 are permanently centered on the local BFS of the sensing fiber 4, no frequency sweeping is required on the BOTDR, so that the measurement time is drastically reduced.

Initially, a classical measurement of the distributed Brillouin gain has to be done according to any known and/or prior art BOTDR method: the BOTDR sweeps the LO frequencies $\nu_{OL_1}$, and $\nu_{OL_2}$ in the Brillouin zone in order to get the first Brillouin gain spectrum (BGS) cartography of fiber 4. When this first cartography is realized, the BOTDR works in the tracking mode described above according to the invention.

The LO frequencies $\nu_{OL_1}$ and $\nu_{OL_2}$ are coded according to respectively the first probe temporal function and the second probe temporal function so that they follow the distribution of the Brillouin frequencies in the sensing fiber 4.

Device 1 and method 2 show significant advantages over other commercial BOTDR :

- Reduced measurement time and/or increased sensing range
- No limit in scanning zone for strain measurements (full elastic zone).

Of course, the invention is not limited to the examples which have just been described and numerous amendments can be made to these examples without exceeding the scope of the invention.

## Claims

1. Method for monitoring an optical fiber, comprising several successive implementations of the following steps :

   - A step of scanning the optical fiber comprising at least one iteration of the following steps:

     ◦ generating and injecting an optical pump signal in the optical fiber, the pump signal being centered on a pump frequency $\nu_L$,
     ◦ Collecting, from the optical fiber, a Brillouin signal resulting from the interaction between the pump signal and the optical fiber, the Brillouin signal comprising an anti-Stokes component centered on an anti-Stokes frequency $\nu_{B_2}$ and a Stokes component centered on a Stokes frequency $\nu_{B_1}$, the anti-Stokes frequency $\nu_{B_2}$ and the Stokes frequency $\nu_{B_1}$ depending on time,
     ◦ Generating a first optical probe signal and a second optical probe signal, the first probe signal being centered on a first probe frequency $\nu_{OL_1}$, the second probe signal being centered on a second probe frequency $\nu_{OL_2}$, wherein at each given time the first probe frequency $\nu_{OL_1}$ is different from the second probe frequency $\nu_{OL_2}$, wherein at each given time each probe frequency $\nu_{OL_1}$, $\nu_{OL_2}$ is different from the pump frequency $\nu_L$, the first probe frequency $\nu_{OL_1}$ depending on time according to a first probe temporal function, the second probe frequency $\nu_{OL_2}$ depending on time according to a second probe temporal function
     ◦ Coupling the two probe signals and the Brillouin signal on an optical detector,
     ◦ a detection, by the detector, of an output detection signal resulting from the coupling step and depending on time,

   - a processing step comprising, based on the output detection signal(s) of the previous scanning:

     ◦ determining the anti-Stokes frequency $\nu_{Bz}$ and/or the Stokes frequency $\nu_{B_1}$, and/or a Brillouin frequency shift and/or a temperature and/or a strain in the optical fiber
     ◦ modifying the first probe temporal function and/or the second probe temporal function for a further scanning.

2. Method according to claim 1, **characterized in that**, during the scanning, the first probe frequency $\nu_{OL_1}$ and the second probe frequency $\nu_{OL_2}$ follow the temporal variations of respectively the Stokes fre-

quency $\nu_{B_1}$ and the anti-Stokes frequency $\nu_{B_2}$.

3. Method according to claim 1 or 2, **characterized in that**, during the scanning, the first probe frequency $\nu_{OL_1}$, and the second probe frequency $\nu_{OL_2}$ are symmetrical or substantially symmetrical with respect to the pump frequency $\nu_L$ and are both distant from pump frequency $\nu_L$ by a frequency equal or substantially equal to a frequency $f_{RF}$.

4. Method according to any one of the previous claims, **characterized in that** $|\nu_{OL_2} - \nu_{B_2}|$ and/or $|\nu_{B_1} - \nu_{OL_1}|$, is constant or substantially constant during the scanning and the further scanning(s).

5. Method according to claim 4, **characterized in that** the first probe temporal function and/or the second probe temporal function is modified in order to maintain constant or substantially constant $|\nu_{OL_2} - \nu_{B_2}|$ and/or $|\nu_{B_1}, - \nu_{OL_1}|$.

6. Method according to claim 5, **characterized in that** the processing step uses , on the output detection signal(s), multi-heterodyne detection at least at frequencies $f_0$ , $f_0 - \delta f$, and $f_0 + \delta f$, or Short-Time Fourier Transform (STFT) at least at frequencies $f_0$ , $f_0 - \delta f$, and $f_0 + \delta f$, the first probe temporal function and/or the second probe temporal function is modified in order to minimize, for each given time, the difference between $f_0$ and $\nu_B$, $\nu_B$ being equal or substantially equal to $|\nu_{OL_2} - \nu_{B_2}|$ and/or $|\nu_{B_1} - \nu_{OL_1}|$.

7. Method according to claim 5 or 6, **characterized in that** the output detection signal is a Lorentzian function centered or substantially centered on $\nu_B$ and/or $f_0$.

8. Method according to any one of the previous claims, **characterized in that** the detector has a bandwidth of at least 1 time $|\nu_{OL_2} - \nu_{B_2}|$ and/or $|\nu_{B_1} - \nu_{OL_1}|$, or at least 2 times $|\nu_{OL_2} - \nu_{B_2}|$ and/or $|\nu_{B_1} - \nu_{OL_1}|$.

9. Method according to any one of the previous claims, **characterized in that** the detector has a bandwidth of less than 10 times $|\nu_{OL_2} - \nu_{B_2}|$ and/or $|\nu_{B_1} - \nu_{OL_1}|$, or less than 5 times $|\nu_{OL_2} - \nu_{B_2}|$ and/or $|\nu_{B_1} - \nu_{OL_1}|$.

10. Method according to any one of the previous claims, **characterized in that** the detection and/or the processing step comprises a frequency low-pass filtering of the output detection signal with a bandwidth less than 10 times $|\nu_{OL_2} - \nu_{B_2}|$ and/or $|\nu_{B_1} - \nu_{OL_1}|$, or less than 5 times $|\nu_{OL_2} - \nu_{B_2}|$ and/or $|\nu_{B_1} - \nu_{OL_1}|$.

11. Method according to any one of the previous claims, **characterized in that** each scanning comprises at least 100, or at least 1000, iterations.

12. Monitoring device, comprising:

- A scanning system comprising:

○ A connector arranged for connecting an optical fiber,
○ a pump generator arranged for generating an optical pump signal and injecting the pump signal through the connector in the optical fiber, the pump signal being centered on a pump frequency $\nu_L$,
○ a collector arranged for collecting, from the connector, a Brillouin signal resulting from the interaction between the pump signal and the optical fiber, the Brillouin signal comprising an anti-Stokes component centered on an anti-Stokes frequency $\nu_{B_2}$ and a Stokes component centered on a Stokes frequency $\nu_{B_1}$, the anti-Stokes frequency $\nu_{B_2}$ and the Stokes frequency $\nu_{B_1}$ depending on time,
○ a probe generator arranged for generating a first optical probe signal and a second optical probe signal, the first probe signal being centered on a first probe frequency $\nu_{OL_1}$, the second probe signal being centered on a second probe frequency $\nu_{OL_2}$, wherein at each given time the first probe frequency $\nu_{OL_1}$ is different from the second probe frequency $\nu_{OL_2}$, wherein at each given time each probe frequency $\nu_{OL_1}$, $\nu_{OL_2}$ is different from the pump frequency $\nu_L$, the first probe frequency $\nu_{OL_1}$ depending on time according to a first probe temporal function, the second probe frequency $\nu_{OL_2}$ depending on time according to a second probe temporal function
○ an optical detector,
○ a coupler, arranged for coupling the two probe signals and the Brillouin signal on the optical detector, the detector being arranged for detecting, an output detection signal depending on time and resulting from the coupling of the two probe signals and the Brillouin signal on the optical detector,

the scanning system being arranged for obtaining at least one output detection signal(s) per scanning by the scanning system,
- a processor arranged and/or programmed for, based on at least one output detection signal(s) of the scanning system:

○ determining the anti-Stokes frequency $\nu_{B_2}$ and/or the Stokes frequency $\nu_{B_1}$, and/or a Brillouin frequency shift and/or a temperature and/or a strain in the optical fiber
○ modifying the first probe temporal function and/or the second probe temporal function for a further scanning of the optical fiber by the scanning system.

**13.** Device according to claim 12, **characterized in that** the processor is arranged and/or programmed so that, during the scanning, the first probe frequency $\nu_{OL_1}$, and the second probe frequency $\nu_{OL_2}$ follow the temporal variations of respectively the Stokes frequency $\nu_{B_1}$ and the anti-Stokes frequency $\nu_{B_2}$.

**14.** Device according to claim 12 or 13, **characterized in that** the processor is arranged and/or programmed so that, during the scanning, the first probe frequency $\nu_{OL_1}$ and the second probe frequency $\nu_{OL_2}$ are symmetrical or substantially symmetrical with respect to the pump frequency $\nu_L$ and are both distant from pump frequency $\nu_L$ by a frequency equal or substantially equal to a frequency $f_{RF}$.

**15.** Device according to any one of claims 12 to 14, **characterized in that** the processor is arranged and/or programmed so that $|\nu_{OL2} - \nu_{B_2}|$ and/or $|\nu_{B_1} - \nu_{OL_1}|$, is constant or substantially constant during the scanning and the further scanning(s).

[Fig. 1]

[Fig. 2]

[Fig. 3]

[Fig. 4]

[Fig. 5]

[Fig. 6]

Time / Frequency Signals at the detector *input.*

Time / Frequency Signals at the detector *output.*

122

$f_0$

$f_0$

$f_0$

$f_0$

$f_0$

Amplitude

Frequency

Time

$V_{OL_1} = V_L - f_{RF}$

$V_{B_1}$

A)

B)

[Fig. 7]

EP 4 707 749 A1

1) Acquisition trace (time domain)

17

3) Averaging     OR     3) Averaging

18, 181     18, 182

2a) Packets of N points

2b) STFT on packets of length N Averaging

2) Multi-hétérodyne détection

m1     m2     m3

$$v_B = f_0 + \frac{m2(m3 - m1)}{2(m1(m2 - 2m3) + m2\,m3)}\delta f$$

4) Calculus of maxima $v_B$

19

5) New set of frequencies $f_{RF}$ delivered to AWG

20

2

16

[Fig. 8]

[Fig. 9]

A)

B)

[Fig. 10]

Europäisches
Patentamt
European
Patent Office
Office européen
des brevets

# EUROPEAN SEARCH REPORT

**Application Number**

EP 24 19 8683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/067292 A1 (OMNISENS SA [CH]) 14 May 2015 (2015-05-14) * page 8, line 13 - page 10, line 34 * * figure 1 * ----- | 1-15 | INV. G01D5/353 |
| A | US 2024/118144 A1 (MURRAY MATTHEW JOSEPH [US] ET AL) 11 April 2024 (2024-04-11) * paragraph [0009] - paragraph [0017] * * paragraph [0063] - paragraph [0071] * * paragraph [0121] - paragraph [0139] * * figures 1A-1C * ----- | 1-15 | |
| A | KR 2023 0059669 A (UNIV CHUNG ANG IND ACAD COOP FOUND [KR]) 3 May 2023 (2023-05-03) * paragraph [0032] - paragraph [0057] * * figure 3 * ----- | 1-15 | |
| A | US 2013/265569 A1 (LE FLOCH SEBASTIEN [CH]) 10 October 2013 (2013-10-10) * paragraph [0077] - paragraph [0090] * * figures 1-3, 8 * ----- | 1-15 | |

**TECHNICAL FIELDS SEARCHED (IPC)**

G01D

The present search report has been drawn up for all claims

| Place of search | Date of completion of the search | Examiner |
|---|---|---|
| Munich | 19 February 2025 | Paraf, Edouard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 19 8683

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2025

| Patent document cited in search report | Publication date | Patent family member(s) | Publication date |
|---|---|---|---|
| WO 2015067292 A1 | 14-05-2015 | EP 3066423 A1<br>WO 2015067292 A1 | 14-09-2016<br>14-05-2015 |
| US 2024118144 A1 | 11-04-2024 | NONE | |
| KR 20230059669 A | 03-05-2023 | NONE | |
| US 2013265569 A1 | 10-10-2013 | BR 112013015856 A2<br>CA 2817865 A1<br>CN 103314276 A<br>EP 2656014 A1<br>ES 2625655 T3<br>RU 2013133829 A<br>US 2013265569 A1<br>WO 2012084040 A1 | 27-06-2017<br>28-06-2012<br>18-09-2013<br>30-10-2013<br>20-07-2017<br>27-01-2015<br>10-10-2013<br>28-06-2012 |

EPO FORM P0459

For more details about this annex : see Official Journal of the European Patent Office, No. 12/82